# EUROPÄISCHE PATENTSCHRIFT

(11) **EP 0 700 325 B1**
(45) Veröffentlichungstag und Bekanntmachung des Hinweises auf die Patenterteilung: **13.08.1997**
(21) Anmeldenummer: 94911123.1
(22) Anmeldetag: 08.03.1994
(51) Int. Cl.: B23K 26/06

(54) **VERFAHREN ZUR MATERIALBEARBEITUNG MIT DIODENSTRAHLUNG**
METHOD FOR MACHINING MATERIALS BY DIODE RADIATION
PROCEDE PERMETTANT DE TRAVAILLER DES MATERIAUX PAR RAYONNEMENT EMIS PAR DES DIODES

(30) Priorität: 19.05.1993 DE 4316829
(43) Veröffentlichungstag der Anmeldung: 13.03.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: BEYER, Eckhard, D-52159 Roetgen (DE); WISSENBACH, Konrad, D-52064 Aachen (DE); KRAUSE, Volker, D-52062 Aachen (DE)
(86) Internationale Anmeldenummer: EP9400706
(87) Internationale Veröffentlichungsnummer: WO9426459

(56) Entgegenhaltungen:
- EP-A- 0 252 268
- WO-A-91/19539
- WO-A-92/13668
- US-A- 4 963 714
- PATENT ABSTRACTS OF JAPAN vol. 14, no. 379 (M-1012) 16. August 1990 & JP,A,02 142 695 (SONY CORP) 31. Mai 1990

## Beschreibung

### Technisches Gebiet

Die Erfindung bezieht sich auf ein Verfahren zur Materialbearbeitung mit Diodenstrahlung, insbesondere Laserdiodenstrahlung, bei dem Werkstücke geschweißt, geschnitten, gebohrt, gelötet und wärmebehandelt werden, jeweils unter Berücksichtigung der Werkstoffe der Werkstücke.

### Stand der Technik

Es ist allgemein bekannt, Materialbearbeitung mit Laserstrahlung durchzuführen. Die Laserstrahlung wird von CO2-, Eximer-, oder Nd-YAG-Lasern erzeugt, mit denen die erforderlichen Intensitäten von mehr als 10³ Watt/cm ohne weiteres erreicht werden können. Nachteilig ist jedoch der geringe Wirkungsgrad von <10% und die auf durchschnittlich ca. 10000 Stunden begrenzte Lebensdauer der Lasersysteme. Des weiteren ist die hohe thermische und mechanische Empfindlichkeit der Laser und deren damit verbundene arbeits- und kostenintensive Wartung nachteilig. Kühlleistung, Netzteilleistung und Raum für den Aufbau der Lasersysteme sind vergleichsweise groß.

Das Strahlprofil des Laserstrahls ist durch den Resonator des Lasers vorbestimmt. Es kann mit Fokussieroptiken, Zylinderspiegeln, Parabolspiegeln, Facettenspiegeln und Integratoren verändert werden. Die Veränderung ist jedoch zeit- und kostenaufwendig. Eine Veränderung des Strahlprofils während der Materialbearbeitung und insbesondere unter Berücksichtigung des jeweiligen Bearbeitungsergebnisses ist derzeit nicht möglich.

Aus der JP-A-2 142 695 ist bereits ein Verfahren zur Materialbearbeitung von Werkstücken mit Diodenstrahlung bekannt, insbesondere Laserdiodenstrahlung, die von einer Vielzahl von Dioden emittiert und mit einem vorbestimmten Strahlprofil auf den Bearbeitungsbereich des Werkstücks gerichtet wird. Bei dem bekannten Verfahren wird die Diodenstrahlung jeder einzelnen Diode mit einer dieser Diode zugeordneten Lichtleitfaser aufgenommen. Das Licht mehrer Lichtleitfasern wird mit einer Linse auf ein Werkstück fokussiert, um dort Lötmittel zu schmelzen. Die Fokussierung erfolgt in spezieller Weise so, daß die Diodenstrahlung jeder Diode einer vorbestimmten Bearbeitungsstelle des Bearbeitungsbereichs zugeführt wird, um dort Chips auf einer Platine punktweise zu verlöten. Daher sind die Enden der Lichtwellenleiter demjenigen Muster entsprechend angeordnet, das durch die Verteilung der Anschlußpunkte des Chips auf der Platine vorgegeben ist. Eine Anpassung des Strahlprofils während des Verlötens bzw. der Materialbearbeitung ist daher nicht möglich.

### Darstellung der Erfindung

Der Erfindung liegt die Aufgabe zugrunde, ein Verfahren zur Materialbearbeitung mit Diodenstrahlung, insbesondere Laserdiodenstrahlung, so zu verbessern, daß eine Anpassung des Strahlprofils während der Materialbearbeitung problemlos möglich ist.

Diese Aufgabe wird dadurch gelöst, daß eine Veränderung der Intensitätsverteilung im Strahlprofil durch Steuerung der Diodenausgangsleistung erfolgt.

Für die Erfindung ist zunächst von Bedeutung, daß zur Materialbearbeitung Diodenstrahlung eingesetzt wird, die von einer Vielzahl von Dioden herrührt. Die Strahlungsanteile der zur Bearbeitung eingesetzten Gesamtstrahlung können beeinflußt werden, indem die Dioden oder mehrere Dioden umfassende Diodeneinheiten angesteuert werden. Die Ansteuerung beeinflußt die Diodenausgangsleistung und damit die Intensität der Strahlung und auch deren Verteilung auf dem Werkstück. Die Ansteuerung kann in sehr kurzer Zeit erfolgen, beispielsweise in weniger als einer Millisekunde. Infolgedessen kann die Veränderung der Intensitätsverteilung im Strahlprofil während des Verfahrens bzw. on-line erfolgen. Hierdurch ist im Vergleich zu den herkömmlichen Lasern eine wichtige weitere Möglichkeit eröffnet, nämlich die Anpassung des Strahlprofils bzw. der Intensitätsverteilung auf dem Werkstück entsprechend den Anforderungen des Bearbeitungsprozesses.

Das vorbeschriebene Verfahren ist insbesondere für Laserdioden bestimmt, die sich gegenüber anderen lichtemittierenden Dioden durch die Emission von Laserstrahlung auszeichnen. Das Verfahren ist jedoch auch vorteilhaft einsetzbar, wenn die Eigenschaften der Laserstrahlung für die Materialbearbeitung nicht benötigt werden. Auch derartige Dioden bzw. Diodeneinheiten können unabhängig voneinander in ihrer Ausgangsleistung verändert werden, so daß sich eine entsprechende Änderung des Strahlprofils bzw. der Intensitätsverteilung der Strahlung auf dem Werkstück ergibt.

Eine Steuerung der Diodenausgangsleistung während des Verfahrens zur Materialbearbeitung ist vorteilhaft, wenn ein bestimmtes Verfahrensprofil vorgegeben ist, beispielsweise die Wärmebestrahlung eines transportierten Werkstücks mit unterschiedlichen Strahlbreiten. In einem solchen Fall kann das Strahlprofil dem Verfahrensprofil entsprechend schablonenmäßig gesteuert werden. Eine Rückmeldung des Bearbeitungsergebnisses ist dann nicht erforderlich. Es wird aber auch eine Vielzahl von Verfahren zur Materialbearbeitung mit Diodenstrahlung geben, bei dem die Beeinflussung des Strahlprofils davon abhängt, wie sich die Bearbeitung auf dem Werkstück entwickelt. Ferner kann es notwendig sein, z.B. wegen nicht erfaßter Geometrie des Werkstücks, daß das Strahlprofil bzw. der Strahlfleck auf dem Werkstück überwacht wird. Eine solche Überwachung kann zur Regelung des Verfahrens herangezogen werden. Dieses wird daher vorteilhafterweise so durchgeführt, daß die durch das Strahlprofil bewirkte Temperaturverteilung des Bearbeitungsbereichs während der Bestrahlung überwacht wird, und daß die Veränderung der Intensitätsverteilung entsprechend dem Überwachungsergebnis erfolgt. Das Überwachungsergebnis ist beispielsweise ein zweidimensionales Wärmebild der Werkstückoberfläche. Dieses kann durch Abscannen der Oberfläche des Werkstücks und Auswertung mit einem schnellen Pyrometer erfolgen, oder beispielsweise durch die Aufnahme des Bearbeitungsbereichs mit einem Detektorarray. Die Regelung kann real-time erfolgen.

Das Verfahren wird zweckmäßigerweise so durchgeführt, daß die Vielzahl von Dioden zu mindestens einer Einheit zusammengebaut ist und die Steuerung der Diodenausgangsleistung diodeneinheitenweise erfolgt. Dieses Verfahren ist insbesondere dann vorteilhaft, wenn die Vielzahl der Dioden zur Erreichung einer hohen Leistungsdichte verwendet werden. Die einheitenweise Steuerung der Diodenausgangsleistung ermöglicht es dann, mit vergleichsweise geringerem Steuerungs- bzw. Regelaufwand auszukommen.

Das Verfahren wird so durchgeführt, daß die Diodeneinheiten mit optischen Kopplungsmitteln an Strahlführungsmittel angeschlossen werden, von denen aus die Diodenstrahlung auf die Bearbeitungsstelle fokussiert wird. Die Ausbildung der optischen Kopplungsmittel im Einzelnen richtet sich nach der Ausbildung und Anordnung der Dioden. Diese sind wegen ihrer im Vergleich zu Lasern größeren Abstrahlwinkel mit Kollimatorlinsen versehen, die Mikrolinsen für jede einzelne Laserdiode sein können, oder die für mehrere Laserdioden bestimmte zylindrische Kollimatorlinsen sein können. Die Ausbildung der Kopplungsmittel hängt auch von der Anordnung der einzelnen Laserdioden in einem Laserdiodenbarren und/oder in einem Laserdiodenwafer ab, sowie von der Ausbildung der Kühleinrichtung für die Dioden. Insoweit und auch bezüglich der Ausbildung der Strahlführungsmittel wird im Einzelnen auf die deutsche Patentanmeldung P 42 34 342.9 hingewiesen, deren Offenbarungsinhalt im Zusammenhang mit der hier vorliegenden Beschreibung Gegenstand der vorliegenden Erfindung ist. Das gilt insbesondere auch bezüglich der dort beschriebenen Fokussierungsmittel.

Die Diodenstrahlung wird dadurch von den Dioden zum Werkstück übertragen, daß als Strahlführungsmittel Lichtleitfasern verwendet werden, die einzeln oder gruppenweise den Diodeneinheiten zugeordnet werden. Durch die Zuordnung der Lichtleitfasern zu den Dioden bzw. zu den Diodeneinheiten einerseits und durch die Anordnung der Lichtleitfasern vor dem Werkstück kann das Strahlprofil bestimmt werden. Eine Verteilung der Lichtleitfasern über eine größere Fläche führt zu einer entsprechend großflächigen Bestrahlung des Werkstücks, was insbesondere damit verbunden werden kann, daß die Enden der Lichtleitfasern die Fokussierungsmittel bilden. Die Lichtleitfasern können aber werkstückseitig auch so in Bezug auf z.B. eine Sammellinse angeordnet sein, daß mit dieser eine Fokussierung der Diodenstrahlen auf einen gemeinsamen Punkt als Bearbeitungsbereich erfolgt. Das erfindungsgemäße Verfahren wird also nicht nur bei flächenmäßiger Verteilung des Strahlprofils im Bearbeitungsbereich vorteilhaft eingesetzt, sondern auch bei dessen Konzentration auf einen kleinen Fleck, z.B. beim keyhole-Schweißen.

Für das Verfahren ist es vorteilhaft, wenn das Strahlprofil mit einem Detektor ermittelt und das Meßergebnis des Detektors einer zentralen Steuereinheit zur Steuerung der Diodenausgangsleistung zugeleitet wird. Der Detektor kann in seiner räumlichen Ausbildung dem jeweiligen Strahlprofil angepaßt sein, so daß sein Einsatzort frei wählbar ist, wobei das Meßergebnis des Detektors von einer an einer anderen Stelle befindlichen zentralen Steuereinheit verwertet wird.

Der Detektor kann aber auch unabhängig von der räumlichen Ausbildung des Strahlprofils ausgebildet werden, indem ein im Strahlengang der Diodenstrahlung angeordneter teildurchlässiger Spiegel einen Bruchteil der der Bearbeitungsstelle zugeleiteten und/oder der von letzterer reflektierten Diodenstrahlung für den Detektor auskoppelt. In diesem Fall stört der teildurchlässige Spiegel in der Bahn der Diodenstrahlung nur wenig, vor allem, weil die von ihm ausgekoppelte Leistung gering ist. Andererseits vermag er die räumliche Verteilung der Strahlungsanteile der gesamten Diodenstrahlung geometrisch genau auszukoppeln, so daß er ein entsprechendes präzises Abbild des Strahlprofils liefert. Entsprechend genau ermittelt er von der Bearbeitungsstelle reflektierte Diodenstrahlung.

Eine Überwachung des Bearbeitungsbereichs des Werkstücks kann aber auch dadurch erfolgen, daß ein teildurchlässiger Spiegel vom Bearbeitungsbereich herrührende Wärme- und/oder Plasmastrahlung aus dem Strahlengang der Diodenstrahlung auskoppelt und einer Detektoreinheit für die Steuerung der Diodenausgangsleistung über einen für die Diodenstrahlung undurchlässigen Filter zuleitet. Der teildurchlässige Spiegel koppelt Wärme- und/oder Plasmastrahlung aus dem Strahlengang der Diodenstrahlung aus und der Filter verhindert, daß zugleich ausgekoppelte reflektierte Diodenstrahlung das Meßergebnis verfälscht.

Von Vorteil ist es, wenn die Temperaturverteilung des Bearbeitungsbereichs in zeitlich kurzen Abständen vollständig ermittelt und/oder vorbestimmte Bereichsorte vorbestimmten Diodeneinheiten zugeordnet werden. Die in zeitlich kurzen Abständen erfolgende Ermittlung der Temperaturverteilung ermöglicht eine entsprechend kurzzeitige Einflußnahme auf die Diodenausgangsleistung und damit auf das Strahlprofil. Die Zuordnung vorbestimmter Bereichsorte zu vorbestimmten Diodeneinheiten ermöglicht ein vereinfachtes Zuordnungsverfahren durch Schwerpunktbildung, was sich ebenfalls im Sinne einer Beschleunigung von Einstellungen, Anpassungen und Regelungen auswirkt. Für diese Ermittlungen kann eine Auswerteeinheit eingesetzt werden, die beispielsweise im Bereich einer zentralen Steuereinheit angeordnet ist.

Eine solche Auswerteeinheit kann auch dann eingesetzt werden, wenn das Verfahren so durchgeführt wird, daß bei der Ermittlung der Temperaturverteilung des Bearbeitungsbereichs auf der Bearbeitungsstelle erfolgende Überlappungen der von den Diodeneinheiten herrührenden Diodenstrahlungsanteile für eine gerichtete Zuordnung zwischen den Strahlungsanteilen und den Diodeneinheiten herangezogen werden. Die Auswerteeinheit erkennt Überlappungen, erkennt die diese Überlappungen erzeugenden Diodenstrahlungsanteile bzw. die diese Anteile erzeugenden Dioden oder Diodeneinheiten und ermöglicht dadurch die Steuerung der Ausgangsleistung der verantwortlichen Dioden oder Diodeneinheiten.

Das Verfahren kann des weiteren so durchgeführt werden, daß der das Strahlprofil ermittelnde oder von der Bearbeitungsstelle reflektierte Diodenstrahlung erfassende Detektor unmittelbar in Strahlungsrichtung hinter den Diodeneinheiten und/oder die von der Bearbeitungsstelle emittierte Wärme- und/oder Plasmastrahlung erfassende Detektoreinheit in Emissionsrichtung unmittelbar hinter einer Fokussiereinheit angeordnet wird. Auf diese Weise werden zweckmäßig gruppierte Baueinheiten erreicht und Beeinflussungen der Meßergebnisse weitgehend vermieden.

Die Diodenstrahlung kann vorteilhafterweise mit einem Faserbündel von Lichtleitfasern von einer Diodeneinheit zum Bearbeitungsbereich transportiert werden. Vorteilhaft ist, daß ein Lichtleitfaserbündel nur zu einem Teil der Führung der Diodenstrahlung zum Bearbeitungsbereich dient und zum anderen Teil für die Weiterleitung der von dem Bearbeitungsbereich emittierten Wärme- und/oder Plasmastrahlung herangezogen wird. Es ergibt sich eine dementsprechend einfache Möglichkeit der Detektion des Wärmebildes bzw. der Temperaturverteilung im Bearbeitungsbereich des Werkstücks durch Lichtleitfasern, welche die Diodenlaserstrahlung nicht zum Werkstück übertragen, dafür aber in umgekehrter Richtung die Werkstückoberfläche auf einer entsprechenden Sensoreinheit abbilden, wobei also das Abbild der Werkstückoberfläche durch die Fokussieroptik hindurch ermittelt wird.

Um irgendwelche Beeinflussungen der die Diodenstrahlung zum Bearbeitungsbereich leitenden Lichtleitfasern durch der Abbildung des Bearbeitungsbereichs des Werkstücks dienende Lichtleitfasern zu vermeiden, wird das Verfahren so durchgeführt, daß der andere Teil des Lichtfaserbündels außen an dessen einem Teil angeordnet wird.

Vorteilhaft ist die Verwendung von Diodenstrahlung beim Umwandlungshärten metallener Werkstückbereiche oder beim lokalen Schmelzen mit einem vorbestimmten Temperaturprofil, unabhängig von lokalen Besonderheiten. In beiden Bearbeitungsfällen wird mit der Diodenstrahlung ein vorbestimmtes Temperaturprofil erzeugt, das unabhängig von der Oberflächenbeschaffenheit des Bearbeitungsbereichs, unabhängig von der lokalen Absorption der Strahlung sowie unabhängig von der Werkstückgeommetrie konstant gehalten bzw. gezielt geändert werden kann, in dem die Diodenausgangsleistung gesteuert wird.

Diodenstrahlung kann auch beim Umformen und Biegen eines Werkstücks eingesetzt werden, wobei die Temperaturverteilung des Bearbeitungsbereichs und dessen jeweilige durch die Bearbeitung bestimmte Geometrie der Steuerung der Diodenausgangsleistung dienen. Das Umformen und Biegen des Werkstücks erfolgt also unter Berücksichtigung des Verformungsvorgangs, wobei entsprechend mehr oder weniger Leistung zum Verformen eingesetzt wird, indem die Diodenausgangsleistung gesteuert wird.

Die Verwendung von Diodenstrahlung beim lokalen Erwärmen zur Änderung der Gefügestruktur, zur Verringerung von Eigenspannungen, oder beim Schneiden von Werkstücken, insbesondere beim abbrandstabilisierten Laserstrahlbrennschneiden, jeweils unter Steuerung des Strahlprofils, wird jeweils durchgeführt, indem das Strahlprofil bzw. die Intensitätsverteilung der Diodenstrahlung gesteuert wird, wobei auf die Rekristallisierungseigenschaften, die Eigenspannungsbildung bzw. die Sauerstoffreaktion Rücksicht genommen werden kann. Insbesondere können beim Konturschneiden von kleinen Radien, Kanten oder Ecken Überreaktionen verursacht durch einen Wärmestau in Spitzen und auf der Innenseite von Rundungen vermieden werden.

Beim Schweißen von Werkstücken zum lokalen Vor- und Nachwärmen in der Nähe der Schweißstelle, insbesondere unter Steuerung des Strahlprofils kann vorteilhafterweise Diodenstrahlung verwendet werden. Das Vorwärmen findet in der Regel nur wenige Millimeter vor der Schweißstelle statt und ermöglicht eine Verringerung der einzukoppelnden Energie. Die Steuerung der Diodenausgangsleistung kann aber auch dazu benutzt werden, daß die Diodenstahlung den gesamten zu regelnden Energieanteil beim Schweißen übernimmt, so daß der Hauptschweißstrahl ungesteuert bleiben kann, zumindest aber mit erheblich verringertem Steuerungsaufwand auskommt. Beim Nachwärmen kann die entstandene noch heiße Oberflächenraupe durch erneutes Anschmelzen bzw. langsameres Erstarren geglättet werden, wodurch Einbrandkerben oder Nahtüberhöhungen auszugleichen sind. Bei noch schmelzflüssiger Fügezone kann die Bildung von Schmelzbadinstabilitäten vermieden werden.

Diodenstrahlung kann vorteilhafterweise auch eingesetzt werden, um Verunreinigungen oder Beschichtungen von Werkstücken lokal zu verdampfen, beispielsweise Zink, Lack, Wachs, Kunststoffe usw.

Diodenstrahlung kann auch verwendet werden, um ein Schmelzbad beim Schweißen lokal zu erwärmen, insbesondere im Bereich der Rückseite einer Dampfkapillaren. Oberflächenspannungen, welche aufgrund von Temperaturgradienten im Schmelzbad hervorgerufen werden, werden abgebaut, so daß die Schmelzebewegungen gleichmäßiger erfolgen und die Ausbildung von Humpingtropfen vermieden wird. Die Verwendung von Diodenstrahlen zusätzlich zur Laserstrahlung beim Schweißen ermöglicht durch die einfache Steuerung der Diodenausgangsleistung eine vorteilhafte Einflußnahme im Sinne einer Verbesserung des Schweißergebnisses.

Vorteilhaft ist weiterhin die Verwendung von Diodenstrahlung beim lokalen Erwärmen eines Werkstücks zur Unterstützung der spanabhebenden Werkstückbearbeitung. Die Erwärmung dient insbesondere zum Unterstützen beim Drehen oder Fräsen, um höhere Standzeiten des Schneidwerkzeugs zu ermöglichen und das Bearbeitungsergebnis zu verbessern.

Die Steuerung der Intensitätsverteilung von Diodenstrahlung kann auch beim Löten von Werkstücken mit Steuerung der Diodenausgangsleistung zum Anschmelzen des Lotes und einer überhitzungsfreien Erwärmung der Werkstücke verwendet werden, wodurch die Benetzung der zu verbindenenden Teile ohne lokale Überhitzung und ohne Spritzerbildung durch Flußmittel erreicht wird.

### Kurze Beschreibung der Zeichnung

Die Erfindung wird anhand der in der Zeichnung dargestellten Ausführungsbeispielen erläutert. Es zeigt:
- Fig.1: eine blockschaltbildartige schematische Darstel lung einer Vorrichtung zur Materialberarbeitung mit Diodenstrahlung, und
- Fig.2: eine der Fig.1 ähnliche Darstellung mit abgeänderten Komponenten.

### Wege zum Verfahren gemäß der Erfindung

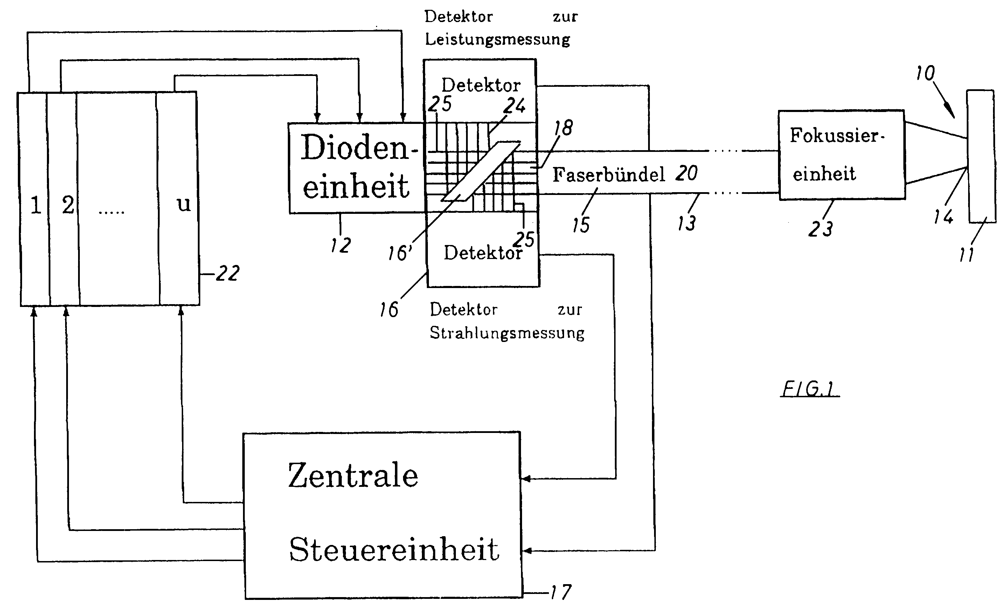

In Fig.1 ist eine Diodeneinheit 12 dargestellt, die in physikalischer Ausführung aus einer Vielzahl einzelner Dioden oder aus einer Mehrzahl von Diodeneinheiten als Baugruppen besteht, die ihrerseits eine Vielzahl von Dioden aufweisen. Das ergibt sich insbesondere aus dem dargestellten Block 22 von Netzgeräten 1,2...u, die für jeweils eine Diodeneinheit bestimmt und dementsprechend mit 12 verschaltet sind.

Von der Diodeneinheit 12 gelangt emittierte Strahlung dem Strahlengang 18 entsprechend mit Strahlführungsmitteln 13 zu einem Werkstück 11, wobei eine Fokussiereinheit 23 zwischengeschaltet ist, welche die Diodenstrahlung auf eine Bearbeitungsstelle 14 des Bearbeitungsbereichs 10 des Werkstücks 11 fokussiert. Die Strahlführungsmittel 13 sind beispielsweise Lichtleitfasern 15 in Gestalt eines Faserbündels 20. Von diesen Lichtleitfasern 15 nimmt die Fokussiereinheit 23 die Diodenstrahlung auf, beispielsweise mit einer Sammellinse.

Zwischen der Diodeneinheit 12 und den Strahlführungsmitteln 13 ist ein Detektor 16 vorhanden, der das Strahlprofil der Diodenstrahlung ermittelt. Hierzu besitzt der Detektor 16 einen teildurchlässigen Spiegel 16', der einen geringen Bruchteil 24 der Diodenstrahlung auskoppelt. Dabei ist aus der schematischen Darstellung ersichtlich, daß die von den Diodeneinheiten herrührenden Diodenstrahlungsanteile 25 ortsgetreu ausgekuppelt werden und so eine Bestimmung der flächenmäßigen Verteilung der Diodenstrahlungsanteile 25 bzw. eine Bestimmung des Strahlprofils gestatten. Des weiteren wird mit dem teildurchlässigen Spiegel 16' Diodenstrahlung ausgekoppelt, die vom Werkstück 11 reflektiert wird. Dieser Anteil der reflektierten Diodenstrahlung gelangt vom Werkstück 11 über die Strahlführungsmittel 13 zu dem teildurchlässigen Spiegel 16' des Detektors 16. Die von der Bearbeitungsstelle bzw. aus dem Bearbeitungsbereich 10 reflektierte Diodenstrahlung 25 wird entsprechend ihrer örtlichen Verteilung ermittelt, so daß ein entsprechendes zweidimensionales Reflektionsbild des Bearbeitungsstelle bzw. des Berabeitungsbereichs 10 entsteht. Der Detektor 16 ist seinen beiden Detektionsergebnissen entsprechend jeweils mit einer zentralen Steuereinheit 17 verbunden, in der das Meßergebnis ausgewertet wird. Entsprechend der Auswertung steuert die Steuereinheit 17 die Netzgeräte des Blocks 22 und damit die Ausgangsleistung der Dioden bzw. der Diodeneinheiten 12. Da die Detektion der Diodenstrahlung in zeitlich kurzen Abständen durchgeführt werden kann, ist eine entsprechend kurzzeitige bzw. on-line erfolgende Steuerung der Diodenausgangsleistung möglich.

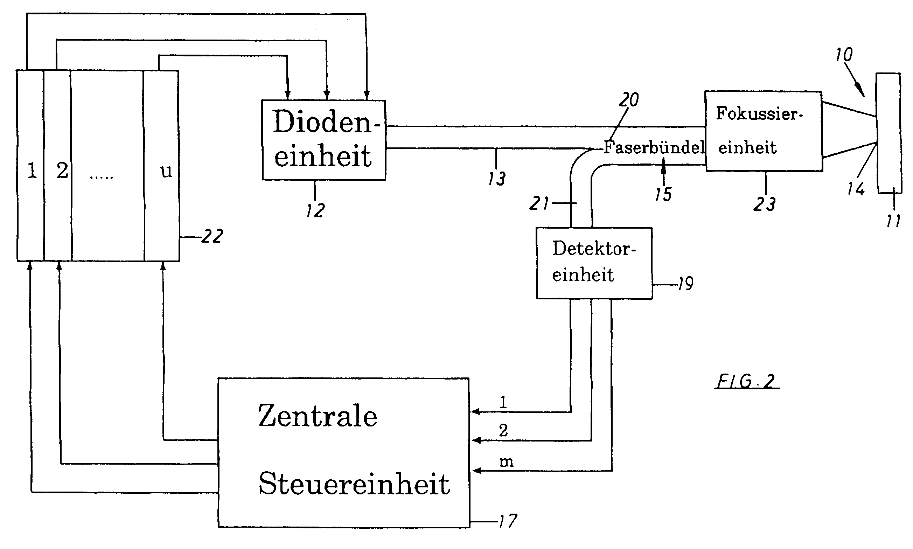

In Fig.2 ist der Aufbau der Vorrichtung dahingehend modifiziert, daß anstelle eines Detektors eine Detektoreinheit 19 eingesetzt wird, die aus dem Bearbeitungsbereich 10 emittierte Wärme- und/oder Plasmastrahlung erfaßt. Die Einheit 19 ist mit der Fokussiereinheit 23 über einen Teil 21 des Faserbündels 15 gekoppelt, wobei dieser Teil 21 außen an dem anderen Teil des Lichtleitfaserbündels 20 angeordnet ist, der ausschließlich zur Führung des Diodenstrahlung zum Bearbeitungsbereich 10 dient.

Mit der Detektoreinheit 19, die in Emissionsrichtung unmittelbar hinter der Fokussiereinheit 23 angeordnet sein kann, wird ein Wärmebild der Bearbeitungsstelle 14 bzw. des Bearbeitungsbereichs 10 ermittelt, welches beispielsweise durch die Anzahl und Zuordnung der Lichtleitfasern des Bündelteils 21 zu jeweils unterschiedlichen Stellen des Bearbeitungsbereichs 10 eine ortsaufgelöste Überwachung ermöglicht. Durch Kopplung der Detektoreinheit 19 an die zentrale Steuereinheit 17 wird das ermittelte Wärmebild ausgewertet und zur Ansteuerung der einzelnen Diodeneinheiten benutzt, so daß die Strahlungsverteilung so beeinflußt wird, daß das Werkstück in geeigneter Weise bearbeitet werden kann.

## Patentansprüche

1. Verfahren zur Materialbearbeitung eines Werkstücks mit Diodenstrahlung, insbesondere Laserdiodenstrahlung, die von einer Vielzahl von Dioden emittiert und mit einem vorbestimmten. Strahlprofil auf den Bearbeitungsbereich (10) des Werkstücks (11) gerichtet wird, **dadurch gekennzeichnet**, daß eine Veränderung der Intensitätsverteilung im Strahlprofil durch Steuerung der Diodenausgangsleistung erfolgt.

2. Verfahren nach Anspruch 1, **dadurch gekennzeichnet**, daß die durch das Strahlprofil bewirkte Temperaturverteilung des Bearbeitungsbereichs (10) während der Bestrahlung überwacht wird, und daß die Veränderung der Intensitätsverteilung entsprechend dem Überwachungsergebnis erfolgt.

3. Verfahren nach Anspruch 1 oder 2, **dadurch gekennzeichnet**, daß die Vielzahl von Dioden zu mindestens einer Einheit (12) zusammengebaut ist und die Steuerung der Diodenausgangsleistung diodeneinheitenweise erfolgt.

4. Verfahren nach Anspruch 3, **dadurch gekennzeichnet**, daß die Diodeneinheiten (12) mit optischen Kopplungsmitteln an Strahlführungsmittel (13) angeschlossen werden, von denen aus die Diodenstrahlung auf die Bearbeitungsstelle (14) fokussiert wird.

5. Verfahren nach einem der Ansprüche 1 bis 4, **dadurch gekennzeichnet**, daß als Strahlführungsmittel (13) Lichtleitfasern (15) verwendet werden, die einzeln oder gruppenweise den Diodeneinheiten (12) zugeordnet werden.

6. Verfahren nach einem der Ansprüche 1 bis 5, **dadurch gekennzeichnet**, daß das Strahlprofil mit einem Detektor (16) ermittelt und das Meßergebnis des Detektors (16) einer zentralen Steuereinheit (17) zur Steuerung der Diodenausgangsleistung zugeleitet wird.

7. Verfahren nach einem der Ansprüche 1 bis 6, **dadurch gekennzeichnet**, daß ein im Strahlengang (18) der Diodenstrahlung angeordneter teildurchlässiger Spiegel (16') einen Bruchteil der der Bearbeitungsstelle zugeleiteten und/oder der von letzterer reflektierten Diodenstrahlung (25) für den Detektor (16) auskoppelt.

8. Verfahren nach einem der Ansprüche 1 bis 7, **dadurch gekennzeichnet**, daß ein teildurchlässiger Spiegel vom Bearbeitungsbereich (10) herrührende Wärme- und/oder Plasmastrahlung aus dem Strahlengang der Diodenstrahlung auskoppelt und einer Detektoreinheit (19) für die Steuerung der Diodenausgangsleistung über einen für die Diodenstrahlung undurchlässigen Filter zuleitet.

9. Verfahren nach einem der Ansprüche 1 bis 8, **dadurch gekennzeichnet**, daß die Temperaturverteilung des Bearbeitungsbereichs (10) in zeitlich kurzen Abständen vollständig ermittelt und/oder vorbestimmte Bereichsorte vorbestimmten Diodeneinheiten zugeordnet werden.

10. Verfahren nach einem der Ansprüche 1 bis 9, **dadurch gekennzeichnet**, daß bei der Ermittlung der Temperaturverteilung des Bearbeitungsbereichs (10) auf der Bearbeitungsstelle (14) erfolgende Überlappungen der von den Diodeneinheiten herrührenden Diodenstrahlungsanteile (25) für eine gerichtete Zuordnung zwischen den Strahlungsanteilen und den Diodeneinheiten herangezogen werden.

11. Verfahren nach einem der Ansprüche 1 bis 10, **dadurch gekennzeichnet**, daß der das Strahlprofil ermittelnde oder von der Bearbeitungsstelle (14) reflektierte Diodenstrahlung erfassende Detektor unmittelbar in Strahlungsrichtung hinter den Diodeneinheiten und/oder die von der Bearbeitungsstelle (14) emittierte Wärme- und/oder Plasmastrahlung erfassende Detektoreinheit in Emissionsrichtung unmittelbar hinter einer Fokussiereinheit angeordnet wird.

12. Verfahren nach einem der Ansprüche 1 bis 11, **dadurch gekennzeichnet**, daß ein Lichtleitfaserbündel (20) nur zu einem Teil der Führung der Diodenstrahlung zum Bearbeitungsbereich (10) dient und zum anderen Teil (21) für die Weiterleitung der von dem Bearbeitungsbereich (10) emittierten Wärme- und/oder Plasmastrahlung herangezogen wird.

13. Verfahren nach Anspruch 12, **dadurch gekennzeichnet**, daß der andere Teil (21) des Lichtfaserbündels (20) außen an dessen einem Teil angeordnet wird.

14. Verfahren nach einem der Ansprüche 1 bis 13, zum Umwandlungshärten metallener Werkstückbereiche oder zum lokalen Schmelzen mit einem vorbestimmten Temperaturprofil, unabhängig von lokalen Besonderheiten.

15. Verfahren nach einem der Ansprüche 1 bis 13, zum Umformen und Biegen eines Werkstücks, wobei die Temperaturverteilung des Bearbeitungsbereichs und dessen jeweilige durch die Bearbeitung bestimmte Geometrie der Steuerung der Diodenausgangsleistung dienen.

16. Verfahren nach einem der Ansprüche 1 bis 13, zum lokalen Erwärmen zur Änderung der Gefügestruktur, zur Verringerung von Eigenspannungen, oder zum Schneiden von Werkstücken, insbesondere zum abbrandstabilisierten Laserstrahlbrennschneiden, jeweils unter Steuerung des Strahlprofils.

17. Verfahren nach einem der Ansprüche 1 bis 13, zum Schweißen von Werkstücken zum lokalen Vor- und Nachwärmen in der Nähe der Schweißstelle, insbesondere unter Steuerung des Strahlprofils.

18. Verfahren nach einem der Ansprüche 1 bis 13, zum lokalen Verdampfen von Verunreinigungen oder Beschichtungen von Werkstücken.

19. Verfahren nach einem der Ansprüche 1 bis 13, zum lokalen Erwärmen eines Schmelzbades beim Schweißen, insbesondere im Bereich der Rückseite einer Dampfkapillaren.

20. Verfahren nach einem der Ansprüche 1 bis 13, zum lokalen Erwärmen eines Werkstücks zur Unterstützung der spanabhebenden Werkstückbearbeitung.

21. Verfahren nach einem der Ansprüche 1 bis 13, zum Löten von Werkstücken mit Steuerung der Diodenausgangsleistung zum Anschmelzen des Lots und einer überhitzungsfreien Erwärmung der Werkstücke.

## Claims

1. Method of processing the material of a workpiece by diode radiation, particularly laser diode radiation, which is emitted by a plurality of diodes and is directed with a predetermined beam profile on the processing area (1) of the workpiece (11), characterised in that an alteration in the intensity distribution in the beam profile is effected by control of the diode output performance.

2. Method according to Claim 1, characterised in that the temperature distribution of the processing area (10) brought about by the beam profile is monitored during irradiation, in that the alteration in the intensity distribution is effected in accordance with the monitoring result.

3. Method according to Claim 1 or 2, characterised in that the plurality of diodes are combined to form at least one unit (12) and control of the diode output performance is effected in terms of diode units.

4. Method according to Claim 3, characterised in that the diode units (12) are connected by optical coupling means to beam guidance means (13) from which point the diode radiation is focused onto the processing point (14).

5. Method according to one of Claims 1 to 4, characterised in that there are used as beam guidance means (13) optical fibres (15) which are associated individually or in groups with the diode units (12).

6. Method according to one of Claims 1 to 5, characterised in that the beam profile is detected by a detector (16) and the measurement result of the detector (16) is passed to a central control unit (17) in order to control the diode output performance.

7. Method according to one of Claims 1 to 6, characterised in that partially-permeable mirror (16') disposed in the beam path (18) of the diode radiation decouples a fraction of the diode radiation (25) passed to the processing point and/or reflected by said mirror (16').

8. Method according to one of Claims 1 to 7, characterised in that a partially-permeable mirror decouples heat and/or plasma radiation originating from the processing area (10) out of the beam path of the diode radiation, and passes it to a detector unit (19) for control of the diode output performance via a filter which is impermeable to the diode radiation.

9. Method according to one of Claims 1 to 8, characterised in that the temperature distribution of the processing area (10) is totally determined at short time intervals and/or predetermined types of area are associated with predetermined diode units.

10. Method according to one of Claims 1 to 9, characterised in that, during determination of the temperature distribution of the processing area (10), overlaps of the components of diode radiation (25) originating from the diode units are used for a directed association between the radiation components and the diode units.

11. Method according to one of Claims 1 to 10, characterised in that the detector determining the beam profile or detecting the diode radiation reflected from the processing point (14) is disposed directly in the beam direction behind the diode units and/or the detector unit determining the heat and/or plasma radiation emitted from the processing point (14) is disposed in the direction of emission directly behind a focusing unit.

12. Method according to one of Claims 1 to 11, characterised in that a bundle of optical fibres (20) serves only for a portion of the guidance of the diode radiation to the processing area (10) and the other portion (21) is used for forwarding the heat and/or plasma radiation emitted from the processing area (10).

13. Method according to Claim 12, characterised in that the other portion (21) of the bundle of optical fibres (20) is disposed externally on one of its portions.

14. Method according to one of Claims 1 to 13 for conversion hardening of metallic workpiece areas or for local melting with a predetermined temperature profile independent of local features.

15. Method according to one of Claims 1 to 13 for shaping and bending a workpiece, the temperature distribution of the processing area and its respective geometry determined by the processing serving to control the diode output performance.

16. Method according to one of Claims 1 to 13 for local heating in order to alter the structure, to reduce intrinsic tensions, or for cutting workpieces, particularly for laser beam burning cutting with stabilised burning loss, with respective control of the beam profile.

17. Method according to one of Claims 1 to 13 for welding workpieces for local pre- and after-heating in the vicinity of the welding point, particularly with control of the beam profile.

18. Method according to one of Claims 1 to 13 for local evaporation of impurities or coatings from workpieces.

19. Method according to one of Claims 1 to 13 for local heating of a melt bath during welding, particularly in the region of the rear side of a vapour capillary.

20. Method according to one of Claims 1 to 13 for local heating of a workpiece in order to reinforce chip-removing workpiece processing.

21. Method according to one of Claims 1 to 13 for soldering workpieces with control of the diode output performance in order to initiate melting of the solder and with heating of the workpieces avoiding excess heat.

## Revendications

1. Procédé servant au traitement des matières d'une pièce à oeuvrer au moyen du rayonnement émis par des diodes, en particulier du rayonnement émis par des diodes laser, qui est émis par une multiplicité de diodes et est dirigé avec un profil prédéterminé de rayonnement sur la zone à usiner (10) de la pièce à oeuvrer (11),
caractérisé en ce que
l'on modifie la répartition de l'intensité dans le profil du rayonnement en commandant la puissance de sortie des diodes.

2. Procédé selon la revendication 1,
caractérisé en ce que
l'on surveille la répartition de la température causée par le profil du rayonnement sur la zone de traitement (10) pendant le rayonnement et en ce que la modification de la répartition de l'intensité a lieu en fonction du résultat de la surveillance.

3. Procédé selon la revendication 1 ou 2,
caractérisé en ce que
l'on rassemble la multiplicité des diodes d'au moins une unité (12) et en ce que la commande de la puissance de sortie des diodes a lieu par unité de diodes.

4. Procédé selon la revendication 3,
caractérisé en ce que
les unités de diodes (12) sont raccordées par des moyens optiques de couplage aux moyens de guidage du rayonnement (13), à partir desquels on focalise le rayonnement des diodes sur l'endroit du traitement (14).

5. Procédé selon l'une des revendications 1 à 4,
caractérisé en ce que
l'on utilise comme moyens de guidage du rayonnement (13) des fibres optiques (15), qui sont associées individuellement ou par groupe aux unités de diodes (12).

6. Procédé selon l'une des revendications 1 à 5,
caractérisé en ce que
le profil du rayonnement est détecté à l'aide d'un détecteur (16) et le résultat de la mesure du détecteur (16) est amené à une unité centrale de commande (17) pour commander la puissance de sortie des diodes.

7. Procédé selon l'une des revendications 1 à 6,
caractérisé en ce qu'
un miroir en partie transparent 16', disposé sur le trajet (18) du rayonnement des diodes, sépare pour le détecteur (16) une fraction du rayonnement des diodes (25) amené au point de traitement et/ou réfléchi par ce dernier

8. Procédé selon l'une des revendications 1 à 7,
caractérisé en ce qu'
un miroir en partie transparent sépare le rayonnement thermique et/ou le rayonnement du plasma, provenant de la zone du traitement (10), du trajet du rayonnement des diodes et l'amène à une unité de détection (19) pour la commande de la puissance de sortie des diodes au moyen d'un filtre qui ne laisse pas passer le rayonnement des diodes.

9. Procédé selon l'une des revendications 1 à 8,
caractérisé en ce que
la répartition de la température de la zone de traitement (10) est complètement détectée à de courts intervalles de temps et/ou des points prédéterminés de traitement sont associés à des unités prédéterminées de diodes.

10. Procédé selon l'une des revendications 1 à 9,
caractérisé en ce que
lors de la détection de la répartition de la température de la zone de traitement (10), on utilise des recouvrements, se produisant à l'endroit du traitement (14) des fractions de rayonnement des diodes (25) provenant des unités de diodes pour avoir une association alignée entre les fractions de rayonnement et les unités de diodes.

11. Procédé selon l'une des revendications 1 à 10,
caractérisé en ce que
le détecteur, qui détecte le profil du rayonnement ou qui détecte le rayonnement des diodes réfléchi par le point de traitement (14), est disposé directement dans le sens du rayonnement derrière les unités de diodes et/ou l'unité de détection, qui détecte le rayonnement thermique et/ou le rayonnement du plasma, émis par le point de traitement (14), est disposée dans le sens de l'émission directement derrière une unité de focalisation

12. Procédé selon l'une des revendications 1 à 11,
caractérisé en ce qu'
un faisceau de fibres optiques (20) sert seulement à une partie du guidage du rayonnement des diodes vers la zone de traitement (10) et à l'autre partie (21) pour la transmission du rayonnement thermique et/ou du rayonnement du plasma émis par la zone de traitement (10).

13. Procédé selon la revendication 12,
caractérisé en ce que
l'autre partie (21) du faisceau de fibres optiques (20) est disposée à l'extérieur sur l'une de ses parties .

14. Procédé selon l'une des revendications 1 à 13,
caractérisé en ce qu'
il sert à la trempe de transformation de zones métalliques de la pièce à oeuvrer ou à la fusion locale avec un profil prédéterminé de la température, indépendant des particularités locales.

15. Procédé selon l'une des revendications 1 à 13,
caractérisé en ce qu'
il sert à la transformation et à la flexion d'une pièce à oeuvrer, la répartition de la température de la zone de traitement et sa géométrie déterminée respectivement par le traitement servant à la commande de la puissance de sortie des diodes.

16. Procédé selon l'une des revendications 1 à 13,
caractérisé en ce qu'
il sert à échauffer localement pour modifier la microstructure, à réduire les tensions naturelles, ou à découper les pièces à oeuvrer, en particulier à découper par rayonnement laser à combustion stabilisée, respectivement en commandant le profil du rayonnement.

17. Procédé selon l'une des revendications 1 à 13,
caractérisé en ce qu'
il sert à souder des pièces à oeuvrer, à préchauffer ou postchauffer localement au voisinage du point de soudage, en particulier en commandant le profil du rayonnement.

18. Procédé selon l'une des revendications 1 à 13,
caractérisé en ce qu'
il sert à vaporiser localement des impuretés ou des enductions sur des pièces à oeuvrer.

19. Procédé selon l'une des revendications 1 à 13,
caractérisé en ce qu'
il sert à échauffer localement un bain de fusion lors du soudage, en particulier dans la zone de la face arrière d'un capillaire de vaporisation.

20. Procédé selon l'une des revendications 1 à 13,
caractérisé en ce qu'
il sert à l'échauffement local d'une pièce à oeuvrer pour faciliter l'usinage de la pièce à oeuvrer par enlèvement de copeaux.

21. Procédé selon l'une des revendications 1 à 13,
caractérisé en ce qu'
il sert au brasage de pièces à oeuvrer en commandant la puissance de sortie des diodes pour fondre la brasure et échauffer sans surchauffe la pièce à oeuvrer
